(19) Europäisches Patentamt
European Patent Office
Office européen des brevets

(11) **EP 2 556 990 B1**

(12) **EUROPEAN PATENT SPECIFICATION**

(45) Date of publication and mention
of the grant of the patent:
**05.06.2019 Bulletin 2019/23**

(51) Int Cl.:
***B60L 15/20*** *(2006.01)*

(21) Application number: **12177951.6**

(22) Date of filing: **26.07.2012**

(54) **A wheel drive architecture for electric vehicles**

Radantriebsarchitektur für Elektrofahrzeuge

Architecture de roue motrice pour véhicules électriques

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.08.2011 IN 2230MU2011**

(43) Date of publication of application:
**13.02.2013 Bulletin 2013/07**

(73) Proprietor: **Tata Technologies Pte Ltd Singapore 068811 (SG)**

(72) Inventors:
• **Power, Kevin John**
**Novi, MI 48375 (US)**
• **Fisher, Kevin**
**Novi, MI 48375 (US)**
• **Jones, Anthony**
**Novi, MI 48375 (US)**

(74) Representative: **Heinze, Ekkehard et al Meissner Bolte Patentanwälte Rechtsanwälte Partnerschaft mbB Widenmayerstraße 47 80538 München (DE)**

(56) References cited:
**US-A- 5 148 883       US-A- 5 258 912**
**US-A- 5 973 463       US-A1- 2004 176 899**
**US-A1- 2007 021 875**

**Description**

**FIELD OF THE INVENTION**

The present invention relates to a wheel drive train assembly adapted to control and optimize running state performance of at least two wheels of an electrical vehicle. The invention can be extended to four wheels. Specifically the invention relates to an electric vehicle that has a drive means electrically connected with each motor for driving each wheel independently butin a coordinated manner.

**BACKGROUND OF THE INVENTION**

Conventional vehicles drive the wheels through power derived from a single discrete source, i.e. engine. The power is transferred to the wheels via a transmission and gear mechanism to achieve rotation of wheels.Manufacturers generally employ two wheel drive or four wheel drive for driving the vehicle.

In a condition wherein the vehicle is driven in straight line, all wheels of vehicle are rotating at the same speed and can be driven easily from a single source. However, while turning the vehicle or in conditions of wheel slip, the corresponding wheels are required to rotate at different speeds even though they all are deriving their motion from a single source. To mitigate this problem generally mechanical gear and differential coupling assemblies are employed that allow wheels to rotate at different speeds.

These mechanical assemblies have limitations which result in the following problems:

a) Limitations in wheel speed synchronization during hard cornering conditions.
b) Inability to easily recover from complete loss of traction of one wheel.
c) Lack of uniform tractioning in all weather conditions.
d) Dependent on steering geometry and weight distribution of the vehicle, the appearance of under steer or over steer.

The two wheel drive architecture is available with front wheel drive and rear wheel drive variants. Both of these variants suffer from the aforesaid general problems.

In case of four wheel drive architecture, all four wheels or at least pair thereof is expected to be driven independently. The four wheel drive gives significant benefits such as superior traction in all weather conditions, superior driving experience for drivere.t.c. Four wheel drives is implemented by a precise traction control inter-engaged with various mechanical means which are in addition to any mechanical devices already in place to achieve two wheel drives. These devices add inefficiencies and weight to the vehicle. Also, because of the nature of the mechanical mechanisms, a wide range of control is impossible.

Thus there exists a need to address the long standing problem of achieving four wheel or two wheel drive architecture having less mechanical complexity, less weight and by extension less cost. Thewheel drive system should also have a wider range of control which will enable superior tractions in all weather conditions and increased safety at the limits of handling.

As discussed earlier, conventional internal combustion engine drive systems are based on a single source and mechanical solutions. These have shortcomings and range of capability which can be overcome by the proposed invention.

Relevant prior art is disclosed in US 2004/176899 A1, US 5 973 463 A,

US 5 148 883 A and US 5 258 912 A.

US 2004/176899 A1 discloses a drive train assembly according to the preamble of claim 1. US 5 148 883 A discloses a regenerative braking electric vehicle with four motors, one for driving each of the four wheels, load sensors for detecting the loads applied to the wheels, and a control unit which determines the respective driving forces distributed to the wheels upon regeneration according to the loads applied to the wheels in such a way as to improve safety. US 5 258 912 A discloses a wheel under steer speed control apparatus and dedicated controller for achieving improved vehicle handling during turning manoeuvres.

**OBJECTS OF THE INVENTION**

It is an object of the invention, to provide an improved drive train assembly to control and optimize running state performance of four wheels of an electric vehicle, for achieving an improved turning behaviour of the vehicle during understeer or oversteer.

**SUMMARY OF THE INVENTION**

Before the assembly is described, it is to be understood that this invention is not limited to the particular assembly and methods described, as there can be multiple possible embodiments of the present invention, which are not expressly defined in the present disclosure. It is also to be understood that the terminology used in the description is for the purpose of describing the particular versions or embodiments only, and is not intended to limit the scope of the present invention which will be limited only by the appended claims.

The above-referenced object is solved by a drive train assembly according to claim 1. Embodiments of the invention are subject of the dependent claims.

**BRIEF DESCRIPTION OF DRAWINGS:**

The foregoing summary, as well as the following detailed description of preferred embodiments, is better understood when read in conjunction with the appended drawings. For the purpose of illustrating the invention, there is shown in the drawings example constructions of the invention; however, the invention is not limited to the specific assembly and methods disclosed in the drawings: The present invention will now be described with reference to the accompanying drawing, in which:

Figure 1 illustrates a modeling architecture for a two wheel drive multi motor solution according to various exemplary embodiments of the invention.

Figure 2 illustrates a functioning of vehicle control unit (VCU) according to exemplary embodiments of the invention.

Figure 3 illustrates example with regards to a steering angle algorithm during turn problem according to one exemplary embodiment of the invention.

Figure 4 illustrates the architecture for a four wheel drive multi motor solution according to various exemplary embodiments of the invention.

Figure 5(a,b,c,d) illustratesarchitecture of the embedded software according to exemplary embodiment of the invention.

## DETAILED DESCRIPTION OF THE INVENTION

Some embodiments of this invention, illustrating all its features, will now be discussed in detail. The words "comprising," "having," "containing," and "including," and other forms thereof, are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise. Although any assemblies and methods similar or equivalent to those described herein can be used in the practice or testing of embodiments of the present invention, the preferred, systems, assemblies and methods are now described. The disclosed embodiments are merely exemplary of the invention, which may be embodied in various forms.

A drive train assembly adapted to control and optimize running state performance of at least two wheels of an electric vehicle, comprising:at least two front steerable wheels and at least two rear non-steered wheel, each wheel individually coupled with a motor; a drive means electrically coupled with each motor for driving the coupled wheel independent of other wheel of said electric vehicle; and an embedded controller device and a memory having executable instructions to control and coordinate varying frequency of inverters attached to vehicle wheel motors based on driver inputs including steering angle, acceleration, brake force, and feedback value as input parameters from each wheel thereby selectively controlling speed of wheels resulting in coordinated driving performance of the vehicle.

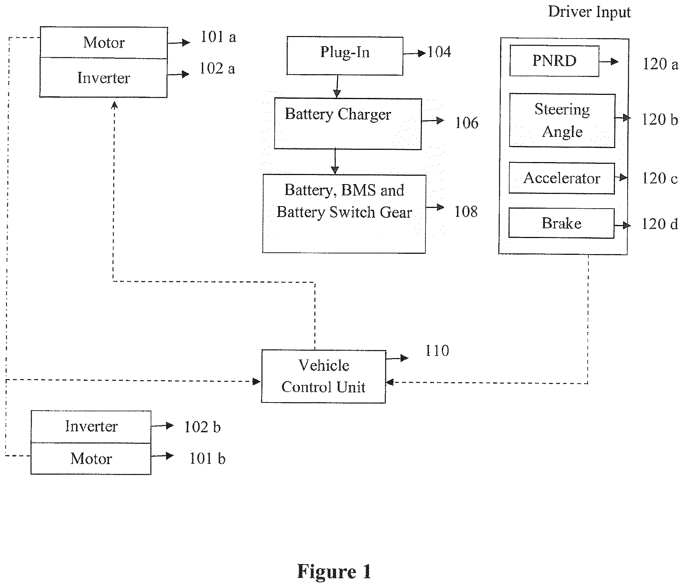

Figure 1 illustrates a modeling architecture for a two wheel drive multi motor solution for an electric vehicle.

Referring to figure. 1, a drive train assembly 100 comprises of a drive means electrically connected with at least one motor for driving at least one wheel independently. According to preferred embodiment of the invention a drive train assembly 100 comprises a two motor 101a and 101b coupled with the two wheels. The inverters 102a and 102b coupled to the motor 101a and 102b via a three phase alternating current (AC) bus. The inverter 102 a and 102b convert DC power from the battery into three phase electricity of varying frequency allowing for speed control of the motor 101a and 101b.

According to another embodiment of the invention a drive train assembly 100, further comprises of a driver input 120. The driver inputs comprises of a means for calculating a rotational speed value for inter-wheel coordination associated with driver inputs and current instantaneous wheel rotational speeds; a means for calculating a wheel acceleration of each of the wheel; a means for determining a steer angle associated with a steering input from the driver; a means for determining the brake force required by the driver; a means for determining and controlling an input frequency to each drive of the motor; and a means for initiating a limp mode for enabling to reduce the power consumption.

According to preferred embodiment of the invention the driver input comprises a group of sensors for sensing the various driver input. According to exemplary embodiment of the invention the sensors used are a steering angle sensor 120b provides indication of direction; an accelerator sensor 120c adapted to give an indication to desire speed; a brake pedal sensor 120d adapted to give an indication of driver intention to slow down or stop.

According to another embodiment of the invention a drive train assembly 100, further comprising Park, Neutral, Reverse, Drive (PNRD) means adapted to provide indication to park, engage forward direction or reverse direction, the PRND means comprises of sensor. Park, Neutral, Reverse, Drive refers to the control lever commonly used with automatic transmissions.

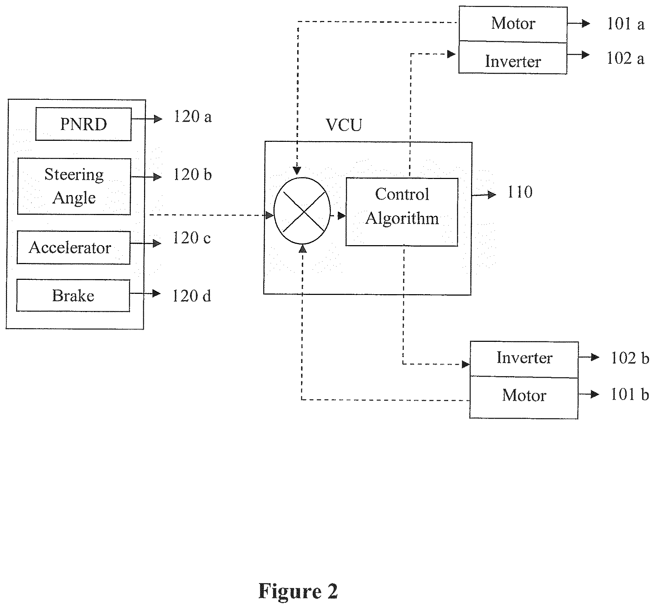

According to another embodiment of the invention a drive train assembly 100, further comprisesan embedded controller device. In a preferred embodiment the embedded controller device is a Vehicle Control Unit (VCU) 110. The Vehicle Control Unit (VCU) 110 is embedded with software code that allows control of the motors 101a and 101b. The Vehicle Control Unit (VCU) 110 receives inputs from driver and feedback from the wheel indicating the speed of individual wheels via accelerator sensors 120c disclosed above. This feedback and control capability can be used to provide a wide variety of multi wheel drive features (as shown in figure 2).

According to another embodiment of the invention the response time for the embedded controller device is less than 10 milliseconds upon receiving the inputs from a driver.

According to another embodiment of the invention a drive train assembly 100, further comprises plug-in 104, battery charger 106, and combination of battery, BMS and battery switchgear to operate the inverters 102a and 102b for providing power to motor 101a and 101b coupled with the wheels.

**Example 1:**

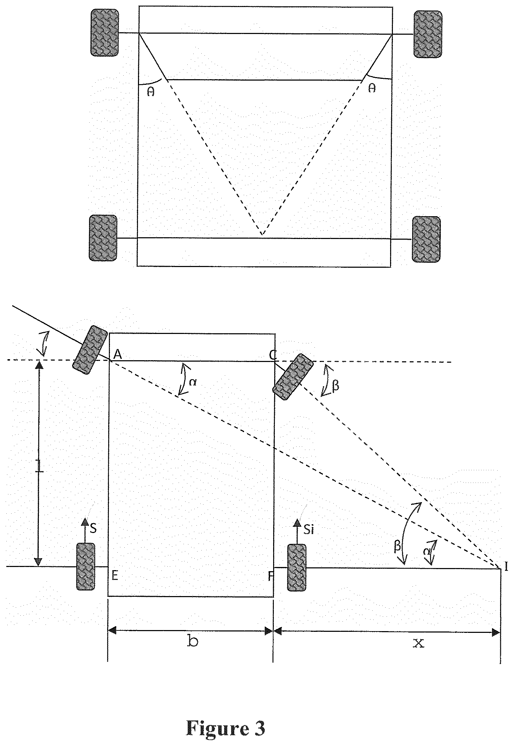

Figure 3 illustrates example with regards to a steering angle algorithm during turn problem according to one exemplary embodiment of the invention. Referring to figure 3, consider for two drive means and assume that the vehicle is moving in the right direction. Let the speed of the inner wheel be Si as indicated in the figure 3. It is this speed at which the vehicle is turning. The outer wheels have to cover more distance as compared to the inner wheels and hence the outer wheels need to rotate faster.

Let the speed of the outer wheels be $S_o$. To complete the full circle, time taken by the inner wheels is 'Ti' which is same as that of the outer wheels say 'To'.

$$Tan\alpha = l \ / \ (b+x)\ldots\ldots\ldots\ldots\ldots\ldots (1)$$

$$Tan \ \beta = l \ / \ x$$

(For inner wheels)

$$T_i = 2\pi \ x \ / \ S_i$$

(For outer wheels)

$$To = 2\pi \ (b+x) \ / \ S_o$$

$$\therefore \ S_o = (b+x/x) \ S_i\ldots\ldots\ldots\ldots\ldots\ldots (2)$$

From equations 1 and 2,

$$S_o = [l/tan\alpha \ / \ l/tan\alpha - b] \ S_i$$

$$S_o = [l/l-btan\beta] \ S_i$$

Final governing equation for Outer and Inner wheel speed
Where,

l - Wheel base

b- Track width

The required steering angle can be read from driver input.

The above equation relates to the case of adjusting wheel speed strictly to take into account a turning radius. The equation can be modified as follows:

$$S_o = [l/l-b \ tan\alpha] \ S_i + K$$

Variation of the constant K can result in certain additional features offered by the two wheel architecture. These are listed as below:

1. If K is set to some positive value, then so will be slightly increased and the turning radius will be increased. This effect is limited by tire scrub but will help with driver effort, turning radius and vehicle feel.
2. In the case of under steer, K can be set to a positive value to compensate for this behavior
3. In the case of over steer, K can be set to a negative value to compensate for this behavior.

As mentioned previously, electric vehicles are limited in range by available energy in the battery. Any strategy that reduces energy drain on the battery will result in increased range. As an approach to transferring this effect into a choice for the driver, it is possible to present two or modes of operation. For example, assuming there are two modes: normal and economy. Normal would not restrict any functions in the vehicle. However, economy could affect some vehicle functions as listed below:

1. Reduce power available to the drive train so that performance is reduced
2. Disable certain functions such as power windows, power steering
3. Reduce or eliminate cabin heating or cooling
4. Disable lighting functions that are not required by regulation.

With four wheel drive architecture, it is possible to drive only two wheels at a time while disabling two motors. This would reduce power consumption from the battery and allows the possibility of a "limp mode". At times when battery energy is almost finished, application of two wheels only drive would allow for an extended range.

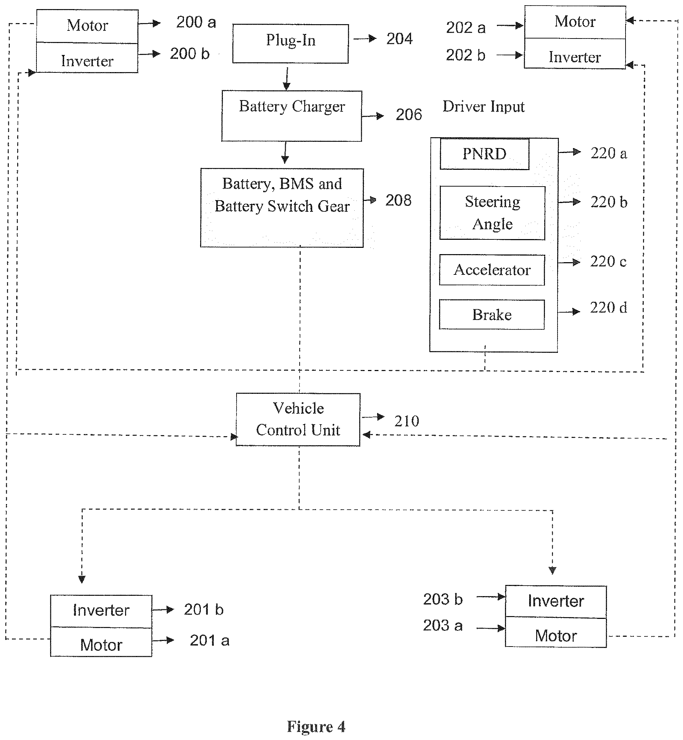

Figure 4 illustrates the architecture for a four wheel drive multi motor solution for an electric vehicle according to various exemplary embodiments of the invention. A four wheel drive assembly200 comprises of a drive means electrically connected with all motors for driving all wheels independently. According to preferred embodiment of the invention, the assembly200 comprises of four motors 201a, 201b, 201c, and 201d coupled to all four wheels respectively. The drive train assembly 200 further comprises four inverters 202a, 202b, 202c and 202d connected to the motor via a three phase alternating current (AC)bus. The inverters convert DC power into three phase electricity of varying frequency allowing for speed control of the four motors.

According to one embodiment of the invention the drive train assembly 200, further comprises the elements to provide indication of driver intent 220. The driver inputs comprises of a means for calculating a rotational speed value for inter-wheel coordination associated with driver inputs and current instantaneous wheel rotational speeds; a means for calculating a wheel acceleration of each of the wheel; a means for determining a steer angle associated with a steering input from the driver; a means for determining and controlling an input frequency to each drive of the motor; and a means for initiating a limp mode for enabling to reduce the power consumption.

According to preferred embodiment of the invention the driver input comprises a group of sensors for sensing the various driver input. According to exemplary embodiment of the invention the sensors used are a steering angle sensor 220b provides indication of direction; an accelerator sensor 220c adapted to give an indication to desire speed; a brake pedal sensor 220d adapted to give an indication of driver intention to slow down or stop.

According to another embodiment of the invention the drive train assembly 200, further comprising Park, Neutral, Reverse, Drive (PNRD) means 220a adapted to provide indication to park, engage forward direction or reverse direction, the PRND means comprises of sensor. Park, Neutral, Reverse, Drive means refers to the control lever commonly used with automatic transmissions.

According to another embodiment of the invention the drive train assembly 200, further comprises an embedded controller device. In a preferred embodiment the embedded controller device is a Vehicle Control Unit (VCU) 210. The Vehicle Control Unit (VCU) 210 is embedded with software code that allows control of the motors 201a, 201 b, 201c and 201d. The Vehicle Control Unit (VCU) 210 receives inputs from driver and feedback from the wheel indicating the speed of individual wheels via accelerator sensors 120c disclosed above.

The assembly200 comprises a vehicle control unit 210 embedded with software code that allows control of the motors. The Vehicle Control Unit (VCU) 210 receives inputs from driver and feedback from the wheel indicating the speed of individual wheels via accelerator sensors 220c disclosed above.

The drive train assembly 200 further comprises plug-in 204, battery charger 206, and combination of battery, BMS and battery switchgear to charge the inverters for providing power to motor coupled with the wheels.

## Example 2:

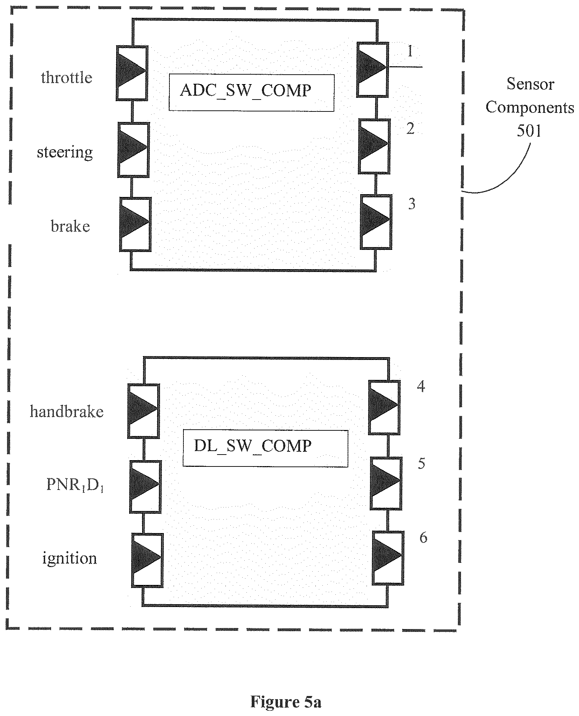

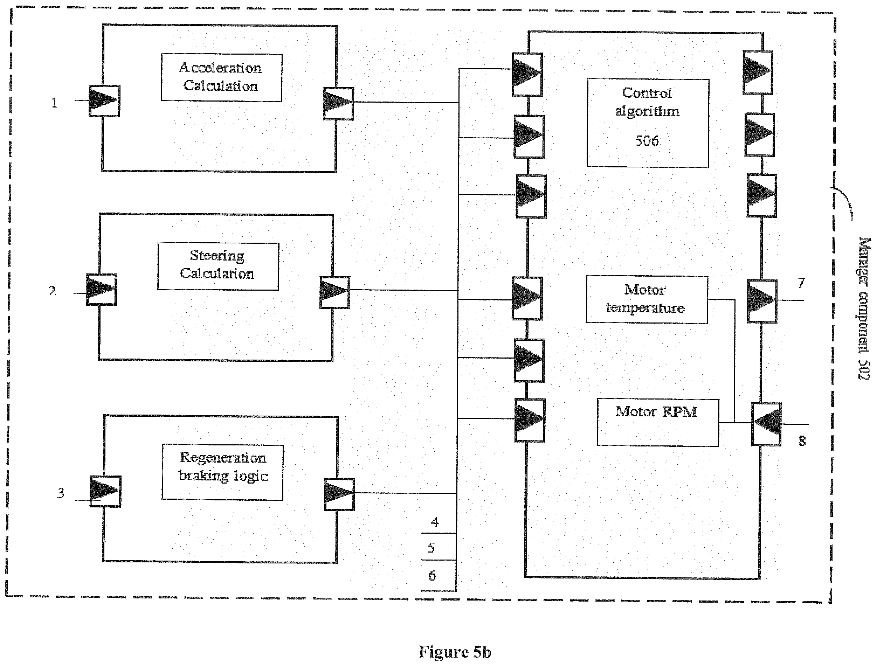

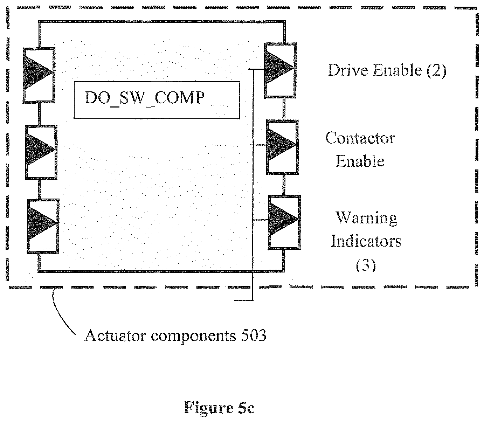

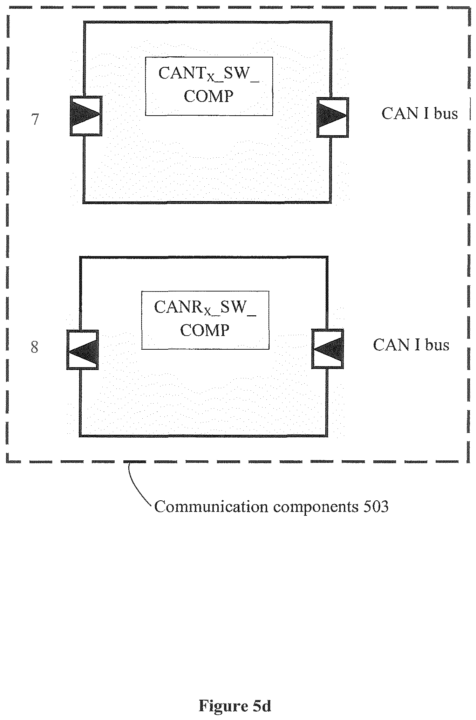

Figure 5(a,b,c,d) illustrates architecture of the embedded software according to exemplary embodiment of the invention. Architecture of the embedded software comprises of Sensor Components 501, Manager Components 502, Actuator Components 503, Communication Components 504 and Control Algorithm 506.

According to an embodiment the sensor component 501 enables a measurable response to a physical condition like indication of direction, indication to desire speed, an indication of driver intention. Software components will read the physical sensor inputs and update the storage variables periodically. The sensor component 501 may comprises a steering angle sensor to provide indication of direction, an accelerator sensor adapted to give an indication to desire speed, a brake pedal sensor adapted to give an indication of driver intention to slow down or stop and Park, Neutral, Reverse, Drive (PNRD) means adapted to provide indication to park, engage forward direction or reverse direction.

According to an embodiment, the manager components 502 based on sensor component inputs, the algorithm and control logic will drive the actuator and communication components. The manager components 502 further comprises control algorithm 506 wherein the control logic will be developed with addressing the essential safety requirements. The manager components 502 will calculate the acceleration, steering angle, and regeneration braking logic via an inputs receive from sensor components 501.

According to an embodiment, the actuator components 503 enables for moving or controlling a mechanism or assembly. Software components will drive the physical actuators such as motor drives (inverter/s for motor control), contactors etc. as applicable.

According to an embodiment, communication components 504 enables for communication activity for sending and receiving messages. The software components will transmit and receive messages via CAN bus to/from Motor drives and communication with ABS ECU only for monitoring wheel speed in case it is not monitored through stand-alone sensors. The provision to connect to any other ECUs as ancillary systems such as Battery Management System, Infotainment System, and HVAC system will be over CAN bus.

## ADVANTAGES OF THE INVENTION

The technical advancements of the present invention include:

1) Provide a superior traction to a vehicle in all weather condition;

2) Provide an increased safety condition where an automobile is pushed to limits of its handling capacity;

3) Provide a superior driving experience for driver of a vehicle;

4) Provide an ability to correct under steer and over steer conditions ;

5) Provide less mechanical complexity in the assembly; and

6) Provide dynamic changes in control strategies to suit driving condition.

7) Allow a driver to choose between driving modes to allow for range extension at the expense of performance

8) Provide a means for a limp mode in the four wheel drive configuration

**Claims**

1. A drive train assembly adapted to control and optimize running state performance of at least four wheels of an electric vehicle, the drive train assembly comprising:

at least two front steerable wheels and at least two rear non-steered wheels, each wheel individually coupled with a motor

a drive means, including an inverter, electrically coupled with the motor for driving a wheel independent of other wheels of said electric vehicle, wherein the inverter is configured to convert DC power from a battery into three phase electricity of varying frequency to drive the motor; and

an embedded controller device comprising a memory storing executable instructions to determine a turning radius of the electric vehicle based on a steering angle sensor,

receive a feedback, via an accelerator sensor, from each wheel during turning of the electric vehicle as per the turning radius, wherein the feedback indicates a speed pertaining to each wheel **characterized in that**

the embedded controller device further comprises executable instructions to control the varying frequency of the inverter based on a predefined formulation and at least one driver input including steering angle, an acceleration and the feedback, wherein the predefined formulation for controlling the varying frequency of the inverter, associated to speed of outer wheels $S_o$ of the vehicle during the turning, comprises $[1/1\text{-b} \tan\alpha]\, S_i + K$, wherein 1 indicates a wheel base, b indicates a track width, $S_i$ indicates speed of inner wheels of the vehicle during the turning, $\alpha$ indicates the steering angle received as a driver input, and K indicates a constant which is varied depending on understeer or oversteer behavior of the electric vehicle, and wherein the constant K is at least one of a positive value and a negative value, and wherein the positive values facilitates to increase the speed of outer wheels $S_o$ thereby compensating during under steer and the negative value facilitates to decrease the speed of outer wheels $S_o$ thereby compensating during over steer.

2. The drive train assembly as defined in claim 1, wherein the electrical vehicle configured for two-wheel drive or four-wheel drive.

3. The drive train assembly as defined in claim 1, further comprising a means for initiating a limp mode for enabling to reduce the power consumption.

4. The drive train assembly as defined in claim 1, further comprising a Park, Neutral, Reverse, Drive (PNRD) means adapted to provide indication to park, engages forward direction or reverse direction, the PRND means comprises of sensor.

5. The drive train assembly as defined in claim 4, wherein the PRND means can include two modes of drive comprises of sport and economy mode.

6. The drive train assembly as defined in claim 1, wherein a steer angle is determined by the steering angle sensor connected with two or four wheels coupled with controller to provide signals for enabling wheel displacement in coordinated manner respectively.

7. The drive train assembly as defined in claim 1, wherein a response time of the embedded controller device is less than 10 milliseconds upon receiving the driver inputs.

**Patentansprüche**

1. Antriebsstrangbaugruppe, die dazu ausgebildet ist, die Fahrzustandsleistung von mindestens vier Rädern eines Elektrofahrzeugs zu steuern und zu optimieren, wobei die Antriebsstrangbaugruppe aufweist:

mindestens zwei gelenkte Vorderräder und mindestens zwei nichtgelenkte Hinterräder, wobei jedes Rad einzeln mit einem Motor gekoppelt ist, eine Antriebseinrichtung, die einen Inverter, der elektrisch mit dem Motor zum Antrieb eines Rades unabhängig von anderen Rädern des Elektrofahrzeugs verbunden ist, einschließt, wobei der Inverter dazu konfiguriert ist, Gleichspannung von einer Batterie in Dreiphasen-Wechselstrom variabler Frequenz zum Antrieb des Motors umzuwandeln, und

eine eingebettete Steuereinrichtung, die einen Speicher zum Speichern ausführbarer Anweisungen aufweist zum

Bestimmen eines Kurvenradius des Elektrofahrzeuges basierend auf einem Lenkwinkelsensor, Empfangen einer Rückkopplung, über einen Beschleunigungssensor, von jedem Rad während des Drehens des Elektrofahrzeugs gemäß dem Kurvenradius, wobei die Rückkopplung

eine jedem Rad eigene Geschwindigkeit anzeigt,

**dadurch gekennzeichnet, dass**

die eingebettete Steuereinrichtung weiter ausführbare Anweisungen aufweist zum Steuern der variablen Frequenz des Inverters basierend auf einer vorbestimmten Formulierung und mindestens einer Ansteuerungs-bzw. Fahrer-Eingabe, die einen Lenkwinkel, eine Beschleunigung und die Rückkopplung einschließt, wobei die vorbestimmte Formulierung zur Steuerung der variablen Frequenz des Inverters, verknüpft mit der Geschwindigkeit der äußeren Räder $S_O$ des Fahrzeugs während des Drehens aufweist [l/l-b tan a] $S_i$+K, wobei I eine Fahrzeugbasis bezeichnet, b eine Spurweite bezeichnet, $S_i$ die Geschwindigkeit der inneren Räder des Fahrzeugs während des Drehens bezeichnet, $\alpha$ den Lenkwinkel, empfangen als Ansteuerungs- bzw. Fahrer-Eingabe, bezeichnet, und K eine Konstante ist, welche in Abhängigkeit von einem Untersteuer- oder Übersteuer-Verhalten des Elektrofahrzeugs variiert, und wobei die Konstante K mindestens einer eines positiven Wertes und eines negativen Wertes ist und wobei die positiven Werte es erleichtern, die Geschwindigkeit der äußeren Räder $S_O$ zu erhöhen, wodurch ein Untersteuern kompensiert wird, und der negative Wert es erleichtert, die Geschwindigkeit der äußeren Räder $S_O$ zu vermindern, wodurch ein Übersteuern kompensiert wird.

2. Antriebsstrangbaugruppe nach Anspruch 1, wobei das Elektrofahrzeug für einen Zweirad-Antrieb oder Vierrad-Antrieb konfiguriert ist.

3. Antriebsstrangbaugruppe nach Anspruch 1, weiter aufweisend eine Einrichtung zum Initiieren eines Schwach-Modus zur Ermöglichung einer Reduzierung des Stromverbrauchs.

4. Antriebsstrangbaugruppe nach Anspruch 1, weiter aufweisend eine Park-, Neutral-, Rückwärts-, Vorwärts(PRND)-Einrichtung, die dazu ausgebildet ist, die Anzeige einer Park-, Eingriffs-Vorwärts- oder Eingriffs-RückwärtsRichtung bereitzustellen, wobei die PRND-Einrichtung einen Sensor aufweist.

5. Antriebsstrangbaugruppe nach Anspruch 4, wobei die PRND-Einrichtung zwei Antriebsmodi einschließen kann, die einen Sport- und einen Economy-Modus aufweisen.

6. Antriebsstrangbaugruppe nach Anspruch 1, wobei ein Lenkwinkel durch den Lenkwinkelsensor bestimmt wird, der mit zwei oder vier Rädern verbunden ist, gekoppelt mit einer Steuerung, um Signale zur Ermöglichung einer Radverschiebung in koordinierter Weise bereitzustellen.

7. Antriebsstrangbaugruppe nach Anspruch 1, wobei eine Reaktionszeit der eingebetteten Steuereinrichtung bei Empfang der Ansteuerungs- bzw. Fahrer-Eingaben kleiner als 10 Millisekunden ist.

**Revendications**

1. Ensemble formant train d'entraînement adapté pour commander optimiser les performances d'état de circulation d'au moins quatre roues d'un véhicule électrique, l'ensemble formant train d'entraînement comprenant :

au moins deux roues avant directrices et au moins deux roues arrière non directrices, chaque roue étant individuellement couplée à un moteur,

un moyen d'entraînement, incluant un convertisseur, couplé électriquement avec le moteur pour piloter une roue indépendamment des autres roues dudit véhicule électrique, dans lequel le convertisseur est configuré pour convertir une puissance en courant continu provenant d'une batterie en électricité triphasée de fréquence variable pour piloter le moteur ; et

un dispositif contrôleur intégré comprenant une mémoire stockant des instructions exécutables pour

- déterminer un rayon de virage du véhicule électrique sur la base d'un capteur d'angle de direction,
- recevoir une rétroaction, via un capteur d'accélération, depuis chaque roue pendant le virage du véhicule électrique concernant le rayon de virage, dans lequel la rétroaction indique une vitesse appartenant à chaque roue,

**caractérisé en ce que**

le dispositif contrôleur intégré comprend en outre des instructions exécutables pour commander la fréquence variable du convertisseur sur la base d'une formulation prédéfinie et d'au moins un angle de direction incluant une entrée de la part du conducteur, une accélération, et la rétroaction, dans lequel la formulation prédéfinie pour commander la fréquence variable du convertisseur, associée à la vitesse des roues extérieure So du véhicule pendant le virage, comprend

[l/l-b tan$\alpha$] Si + K, dans laquelle I indique une base de roue, b indique une largeur de voie, Si indique la vitesse de roue intérieure du véhicule pendant le virage, $\alpha$ indique l'angle de direction reçu à titre d'entrée de la part du conducteur, et K indique une constante qui est variée en dépendance d'un comportement de sous-virage ou de sur-virage du véhicule électrique, et dans laquelle la constante K est au moins une valeur parmi une valeur positive et une valeur négative, et dans lequel la valeur positive facilite l'augmentation de la vitesse des roues extérieures So, en compensant ainsi pendant un sous-virage et la valeur négative facilite la diminution de la vitesse des roues extérieures So en compensant ainsi pendant un sur-virage.

2. Ensemble formant train d'entraînement selon la revendication 1, dans lequel le véhicule électrique est configuré pour un entraînement sur deux roues ou pour un entraînement sur quatre roues.

3. Ensemble formant train d'entraînement selon la revendication 1, comprenant en outre un moyen pour initialiser un mode "en douceur" pour permettre la réduction de la consommation de puissance.

4. Ensemble formant train d'entraînement selon la revendication 1, comprenant un moyen dit "PNRD" (Park, Neutral, Reverse, Drive ou "stationnement, neutre, marche arrière, marche avant") adapté pour fournir des indications pour le stationnement, pour engager la marche avant ou la marche arrière, le moyen PRND comprenant un capteur.

5. Ensemble formant train d'entraînement selon la revendication 4, dans lequel le moyen PRND peut inclure deux modes de fonctionnement comprenant un mode sportif et un mode économique.

6. Ensemble formant train d'entraînement selon la revendication 1, dans lequel un angle de direction est déterminé par le détecteur d'angle de direction connecté à deux ou à quatre roues couplées avec le contrôleur afin de fournir des signaux pour permettre le déplacement des roues respectivement de manière coordonnée.

7. Ensemble formant train d'entraînement selon la revendication 1, dans lequel un temps de réponse du dispositif contrôleur intégré est inférieur à 10 ms lors de la réception des entrées conducteures.

Driver Input

| Motor | → 101 a |

| Inverter | → 102 a |

| Plug-In | →104 |

| Battery Charger | → 106 |

| Battery, BMS and Battery Switch Gear | → 108 |

| PNRD | → 120 a |

| Steering Angle | → 120 b |

| Accelerator | → 120 c |

| Brake | → 120 d |

| Vehicle Control Unit | → 110 |

| Inverter | → 102 b |

| Motor | → 101 b |

**Figure 1**

Motor ——► 101 a

Inverter ——► 102 a

PNRD ——► 120 a

VCU

Steering
Angle ——► 120 b

Control
Algorithm ——► 110

Accelerator ——► 120 c

Brake ——► 120 d

Inverter ——► 102 b

Motor ——► 101 b

**Figure 2**

**Figure 3**

**Figure 4**

**Figure 5a**

Figure 5b

Figure 5c

CANT$_X$_SW_ COMP

7

CAN I bus

CANR$_X$_SW_ COMP

8

CAN I bus

Communication components 503

**Figure 5d**

**EP 2 556 990 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2004176899 A1
- US 5973463 A
- US 5148883 A
- US 5258912 A